# EUROPÄISCHE PATENTSCHRIFT

(11) **EP 2 881 280 B1**
(45) Veröffentlichungstag und Bekanntmachung des Hinweises auf die Patenterteilung: **15.02.2017**
(21) Anmeldenummer: 14466024.8
(22) Anmeldetag: 05.12.2014
(51) Int. Cl.: B60N 3/10, B60R 7/04

(54) **Multifunktionskasten**
Multipurpose Box
Boîte multifonctionnelle

(30) Priorität: 06.12.2013 CZ 20130980
(43) Veröffentlichungstag der Anmeldung: 10.06.2015
(73) Patentinhaber: Skoda Auto A.S., 293 60 Mladá Boleslav (CZ)
(72) Erfinder: Botos, Petr, 29471 Benátky nad Jizerou (CZ); Králik, Martin, 29301 Mladá Boleslav (CZ)

(56) Entgegenhaltungen:
- EP-A1- 2 072 329
- WO-A2-2009/077071
- US-A- 5 921 519
- US-A1- 2003 137 158
- US-A1- 2005 072 780

## Beschreibung

### Technisches Gebiet

Die Erfindung betrifft eine Multifunktionsablage, insbesondere eine an der Mittelkonsole eines Kraftfahrzeuges angeordnete Multifunktionsablage zum Verstauen von kleineren Gegenständen und/oder Trinkbecher.

### Bisheriger Stand der Technik

Derzeit werden im Interieur der Kraftfahrzeuge zur Steigerung des Reisekomforts der Insassen verschiedene Verstauräume oder Ablagefächer zum Verstauen von kleineren Gegenständen, wie z.B. der Mobiltelefone, des Kleingeldes, der Schreibwaren usw. verwendet. Weiter sind Getränkehalter bekannt, die in der Regel als ausfahrbar in der Schalttafel oder als Bestandteil der Schalttafelkonsole zwischen den Vordersitzen angeordnet werden. Um die Mittelkonsole universeller zu gestalten, werden Lösungen verwendet, bei denen die Ablagefächer mit integrierten Getränkehaltern ausgebildet werden. Aus der Patentschrift US 2003/0137158 A1 ist die Lösung bekannt, bei der im Ablagefach der Schalttafelkonsole schwenkbar ein ausfahrbares, L-förmiges Element angeordnet ist, das nach dem Lösen des Arretierungsmechanismus in die Gebrauchsstellung ausfährt und so eine gegen das Umkippen sichernde Stütze für das eingelegte Getränkebecher/-gefäß bildet. Die Entriegelung des Arretierungsmechanismus ist nicht sehr benutzerfreundlich.

### Darstellung der Erfindung

Die Aufgabe wird durch eine Multifunktionsablage gelöst, die als ein etwa rechteckiger Verstauraum ausgebildet ist, der aus einer Vorderwand, einer Rückwand, Seitenwände und einem Boden besteht, wobei an der Rückwand ein Hohlraum vorhanden ist, in dem wenigstens ein um einen Bolzen schwenkbares Halteelement angeordnet ist, wobei in dem Hohlraum an der Rückwand ferner ein mit dem Halteelement mitwirkender Entriegelungsmechanismus angeordnet ist. Die Darstellung der Erfindung liegt darin, dass das Entriegelungsmechanismus aus einem schwenkbar angeordneten Entriegelungshebel besteht, der einen kürzeren Hebelarm, an dem die Entriegelungsnase angeordnet ist, und einen längeren Hebelarm aufweist, an dem die Entriegelungstaste und ferner eine Zugfeder angeordnet sind, die an einem Ende mit dem längeren Hebelarm und am zweiten Ende mit dem Gehäuse der Multifunktionsablage verbunden ist.

Um eine zügige Bewegung des Halteelementes sicherzustellen weist der Bolzen am Halteelement eine Verzahnung auf, die in eine Verzahnung einer anliegenden Bremse eingreift.

Damit eine stabile Position des Halteelementes sichergestellt wird, weist die Vorderwand mindestens eine Ausnehmung auf.

Aus ästhetischen Gründen ist der Hohlraum an der Rückwand mit einer Abdeckung abgedeckt, in der eine Öffnung für die Entriegelungstaste ausgebildet ist, wobei die Abdeckung und die Entriegelungstaste flächenbündig liegen.

### Übersicht der Figuren der Zeichnungen

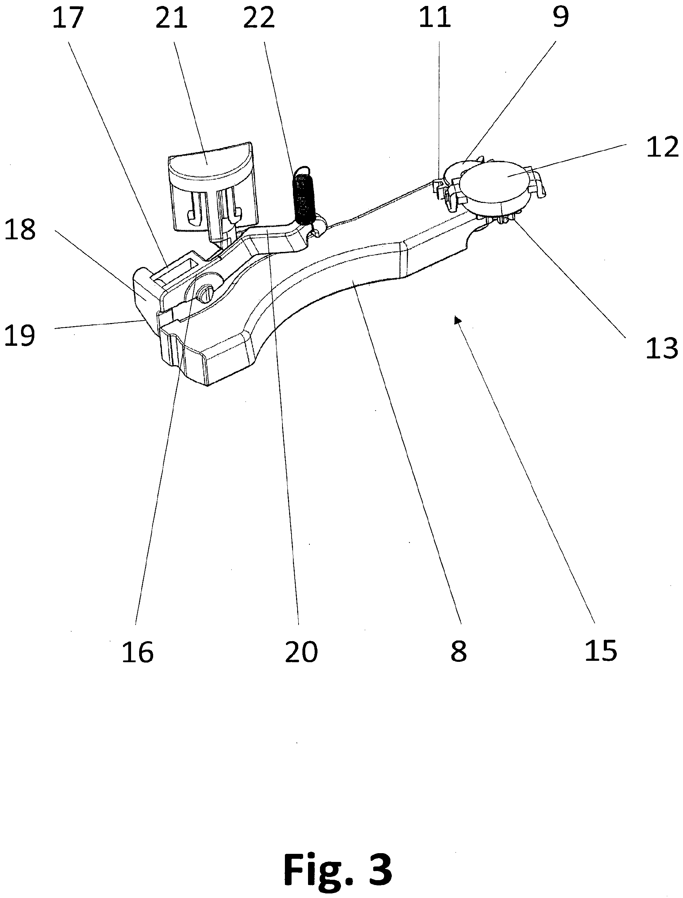

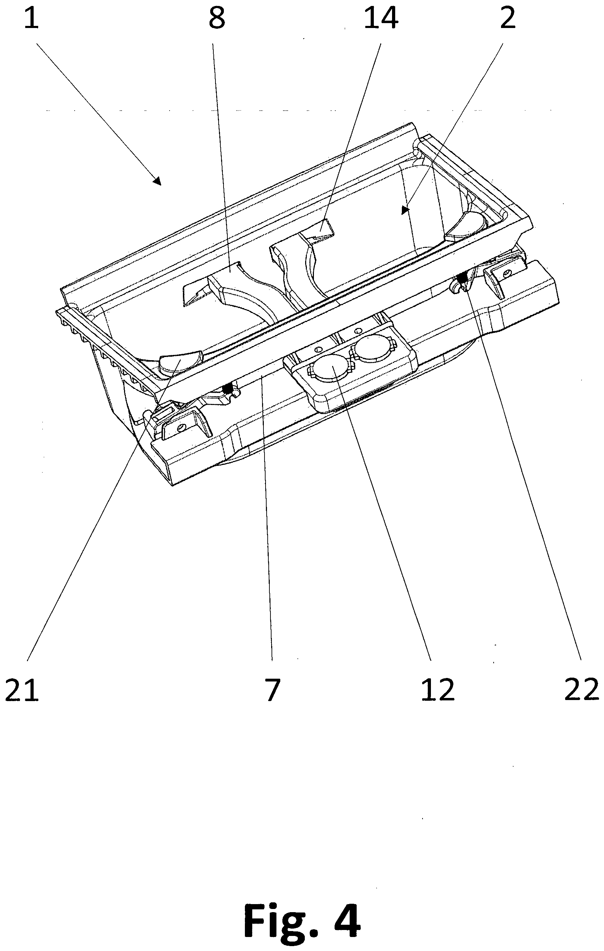

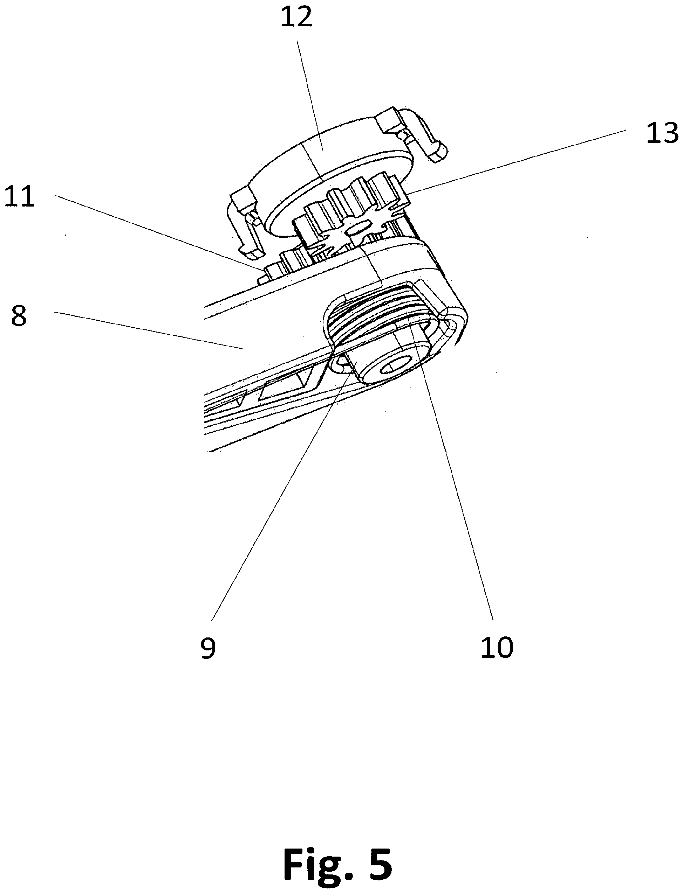

Die Erfindung wird näher anhand der Ausführungsbeispiele gemäß den beigefügten Zeichnungen erläutert, in denen zeigen die Fig. 1 einen Grundriss der Multifunktionsablage mit Halteelementen in einer Bereitschaftsstellung, die Fig. 2 eine perspektivische Ansicht der Multifunktionsablage mit Halteelementen in der Gebrauchsstellung, die Fig. 3 eine perspektivische Ansicht des Entriegelungsmechanismus, die Fig. 4 einen Schnitt der Multifunktionsablage in einer perspektivischen Ansicht und Fig. 5 ein Detail des Halteelementes in einer perspektivischen Ansicht.

### Ausführungsbeispiel der Erfindung

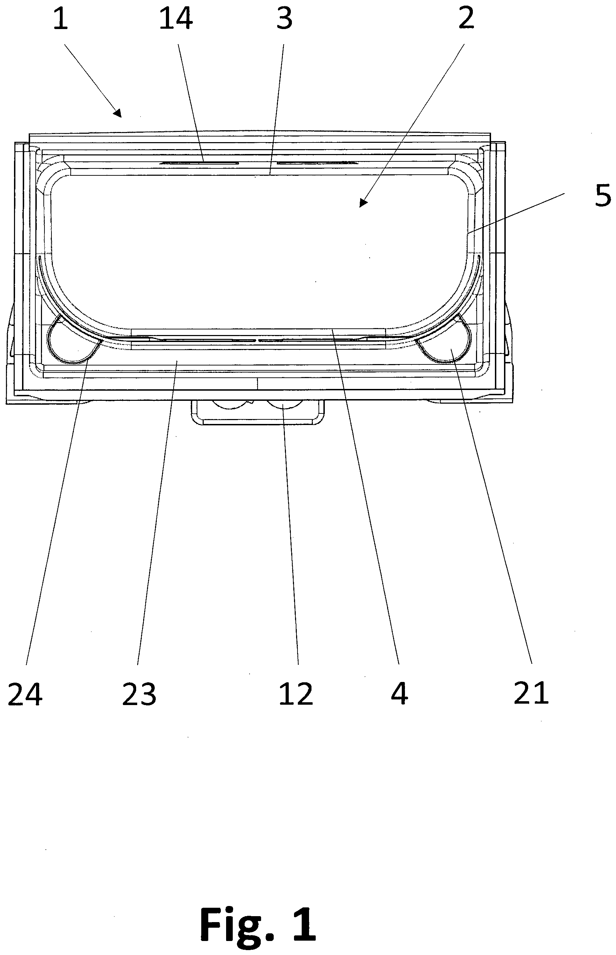

Wie der Fig. 1 zu entnehmen ist, ist eine Multifunktionsablage 1 als ein rechteckiger Verstauraum 2 ausgebildet, der aus einer Vorderwand 3, einer Rückwand 4, Seitenwänden 5 und einem Boden 6 besteht. An der Rückwand 4 ist ein Hohlraum 7 ausgebildet, in dem zwei Halteelemente 8 angeordnet sind. Jedes der Halteelemente 8 ist um den Bolzen 9 verschwenkbar, an dem eine Torsionsfeder 10 angeordnet ist. Im oberen Abschnitt des Bolzens 9 ist eine Bolzenverzahnung 11, in welche eine Verzahnung 13 einer anliegenden Bremse 12 eingreift. In der Vorderwand 3 sind Ausnehmungen 14 ausgebildet. Im Hohlraum 7 an der Rückwand 4 ist ferner an jeder Seite ein Entriegelungsmechanismus 15 angeordnet, der aus einem schwenkbar angeordneten Entriegelungshebel 16 besteht, an deren kürzeren Hebelarm 17 eine Entriegelungsnase 18 mit ausgebildeter Schrägfläche 19 und an einem längeren Hebelarm 20 eine Entriegelungstaste 21 und ferner eine Zugfeder 22 angeordnet sind, welche an einem Ende mit dem längeren Hebelarm 20 und am zweiten Ende mit dem Gehäuse der Multifunktionsablage verbunden ist. Der Hohlraum 7 an der Rückwand 4 ist mit einer Abdeckung 23 abgedeckt, in der Öffnungen 24 für die Entriegelungstasten 21 ausgebildet sind. Die Abdeckung 23 und Entriegelungstasten 21 liegen flächenbündig.

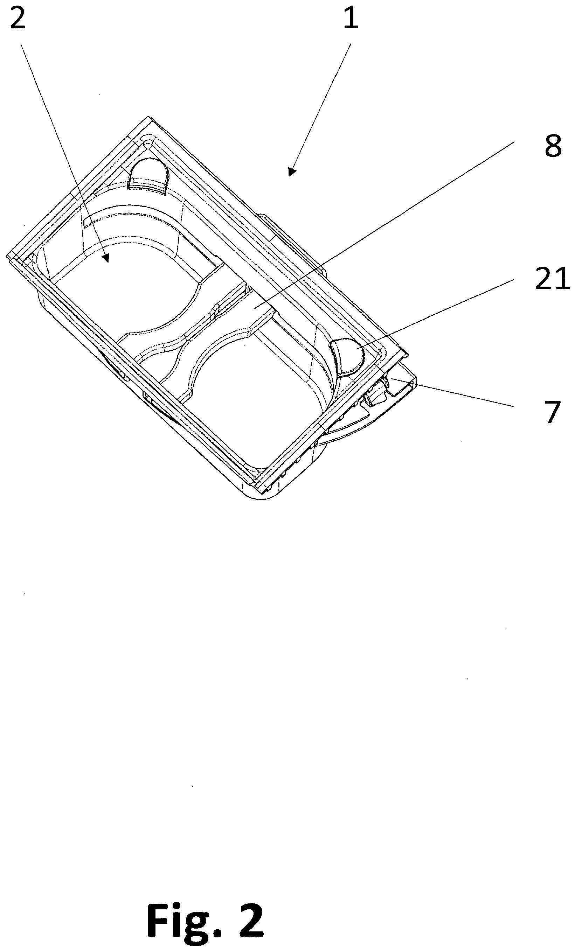

Wird die Multifunktionsablage 1 zum Verstauen von kleinen Gegenständen verwendet, sind die Halteelemente 8 in der arretierten Stellung in dem Hohlraum 7 an der Rückwand 4. Soll die Multifunktionsablage 1 als Getränkehalter genutzt werden, wird die Entriegelungstaste 21 gedrückt, wodurch der Entriegelungshebel 16 und ebenso der kürzere Hebelarm 17 mit der Entriegelungsnase 18 verschwenkt wird und nachfolgend das Halteelement 8 entriegelt. Dieses verschiebt sich durch die Einwirkung der Torsionsfeder 10 in die in Fig. 2 dargestellte Gebrauchsstellung, sodass sein Ende in die Ausnehmung 14 eingreift, wodurch eine stabile Position des Halteelementes 8 sichergestellt wird. Einer zügigen Bewegung des Halteelementes 8 aus der arretierten in die Gebrauchsstellung hilft die Bremse 12, die über die Verzahnung 11, 13 mit dem Halteelement 8 verbunden ist. Das Halteelement 8 wird zurück in die arretierte Position durch seine Verschwenkung gegen die Kraft der Torsionsfeder 10 so gebracht, dass nach dem Aufsetzen des Halteelementes 8 auf die Schrägfläche 19 der Entriegelungshebel gegen die Kraft der Zugfeder 22 verschwenkt bzw. weggedrückt wird, bis die Entriegelungsnase 18 durch die Einwirkung der Zugfeder 22 in die Ausgangsstellung zurückgesetzt wird, in der das Halteelement 8 in einer arretierten Bereitschaftsstellung ist.

### Bezugszeichenliste

- 1.: Multifunktionsablage
- 2.: Verstauraum
- 3.: Vorderwand
- 4.: Rückwand
- 5.: Seitenwand
- 6.: Boden
- 7.: Hohlraum
- 8.: Halteelement
- 9.: Bolzen
- 10.: Torsionsfeder
- 11.: Bolzenverzahnung
- 12.: Bremse
- 13.: Verzahnung
- 14.: Aussparung
- 15.: Entriegelungsmechanismus
- 16.: Entriegelungshebel
- 17.: kürzerer Hebelarm
- 18.: Entriegelungsnase
- 19.: Schrägfläche
- 20.: längerer Hebelarm
- 21.: Entriegelungstaste
- 22.: Zugfeder
- 23.: Abdeckung
- 24.: Öffnung

## Patentansprüche

1. Multifunktionsablage (1), die als ein etwa rechteckiger Verstauraum (2) ausgebildet ist, der aus einer Vorderwand (3), einer Rückwand (4), Seitenwänden (5) und einem Boden (6) besteht, wobei an der Rückwand (4) ein Hohlraum (7) vorhanden ist, in dem wenigstens ein um einen Bolzen (9) schwenkbares Halteelement (8) angeordnet ist, wobei in dem Hohlraum (7) an der Rückwand (4) ferner ein mit dem Halteelement (8) mitwirkender Entriegelungsmechanismus (15) angeordnet ist, **dadurch gekennzeichnet, dass** der Entriegelungsmechanismus (15) aus einem schwenkbar angeordneten Entriegelungshebel besteht (16), der einen kürzeren Hebelarm (17), an dem die Entriegelungsnase (18) angeordnet ist, und einen längeren Hebelarm (20) aufweist, an dem die Entriegelungstaste (21) und ferner eine Zugfeder (22), angeordnet sind, die an einem Ende mit dem längeren Hebelarm (20) und am zweiten Ende mit dem Gehäuse der Multifunktionsablage (1) verbunden ist.

2. Multifunktionsablage (1) nach Anspruch 1 **dadurch gekennzeichnet, dass** der Bolzen (9) am Haltelement (8) eine Bolzenverzahnung (11) aufweist, die mit einer Verzahnung (13) einer anliegenden Bremse (12) mitwirkt.

3. Multifunktionsablage (1) nach Anspruch 1 **dadurch gekennzeichnet, dass** die Vorderwand (3) mindestens eine Ausnehmung (14) aufweist.

4. Eine Multifunktionsablage (1) nach Anspruch 1 **dadurch gekennzeichnet, dass** der Hohlraum (7) an der Rückwand (4) mit einer Abdeckung (23) abgedeckt ist, die eine Öffnung (24) für die Entriegelungstaste (21) aufweist.

5. Multifunktionsablage (1) nach Anspruch 4 **dadurch gekennzeichnet, dass** die Abdeckung (23) und die Entriegelungstaste (21) flächenbündig liegen.

## Claims

1. Multi-function support (1), which it is designed as a collecting compartment (2) basically rectangular, which is formed by a front wall (3), a rear wall (4), side walls (5) and a bottom (6), where on the rear wall (4) a hollow compartment (7) is provided, in which at least one stop element (8) is placed pivoting around a pin (9), where in the hollow compartment (7) on the rear wall (4) an unlocking mechanism (15) is also arranged, which cooperates with the stop element (8), **characterized in that** the unlocking mechanism (15) is made by an unlocking lever (16) pivotally arranged, which has a shorter lever arm (17), on which is the unlocking projection (18) is placed, and a longer lever arm (20), on which the unlocking button (21) is placed and has also a traction spring (22), which on an end is connected with the longer lever arm (20), and on its second end is connected with the casing of the multi-function support (1).

2. Multi-function support (1) according to claim 1, **characterized in that**, the pin (9) has on the stop element (8) pin teeth (11), which cooperate with teeth (13) of an applied brake (12).

3. Multi-function support (1) according to claim 1, **characterized in that**, the front wall (3) has at least one cavity (14).

4. Multi-function support (1) according to claim 1, **characterized in that**, the hollow compartment (7) is covered on the rear wall (4) with a cover (23), which has an opening (24) for the unlocking button (21).

5. Multi-function support (1) according to claim 4, **characterized in that**, the cover (23) and the unlocking button (21) are coincident at the surface.

## Revendications

1. Support multifonction (1), prévu comme un compartiment de collecte (2) essentiellement rectangulaire, formé par une paroi avant (3), une paroi arrière (4), des parois latérales (5) et un fond (6), où la paroi arrière (4) est un compartiment creux (7), dans lequel est disposé au moins un élément d'arrêt (8) pivotant autour d'un pivot (9), où dans le compartiment creux (7) sur la paroi arrière (4) est également disposé un mécanisme de déverrouillage (15) coopérant avec l'élément d'arrêt (8), **caractérisé en ce que** le mécanisme de déverrouillage (15) est formé par un levier de déverrouillage (16) disposé pivotant, qui présente un bras de levier plus court (17), sur lequel la saillie de déverrouillage (18) est disposée, et un bras de levier plus long (20), sur lequel sont disposés le bouton de déverrouillage (21) ainsi qu'un ressort de traction (22), qui sur une extrémités est relié au bras de levier plus long (20) et sur la deuxième extrémité est relié au boîtier du support multifonction (1).

2. Support multifonction (1) selon la revendication 1, **caractérisé en ce que** le pivot (9) présente, sur l'élément d'arrêt (8) une denture (11) de pivot, qui coopère avec une denture (13) d'un frein (12) appliqué.

3. Support multifonction (1) selon la revendication 1, **caractérisé en ce que** la paroi avant (3) a au moins une cavité (14).

4. Support multifonction (1) selon la revendication 1, **caractérisé en ce que** le compartiment creux (7) est recouvert sur la paroi arrière (4) avec un couvercle (23), qui a une ouverture (24) pour le bouton de déverrouillage (21).

5. Support multifonction (1) selon la revendication 4, **caractérisé en ce que** le couvercle (23) et le bouton de déverrouillage (21) sont coïncidents sur la surface.
